# EUROPÄISCHE PATENTSCHRIFT

(11) **EP 1 777 789 B1**
(45) Veröffentlichungstag und Bekanntmachung des Hinweises auf die Patenterteilung: **16.01.2013**
(21) Anmeldenummer: 06122054.7
(22) Anmeldetag: 10.10.2006
(51) Int. Cl.: H02B 1/20

(54) **Vormontierte elektrische Installationseinheit**
Pre-assembled electrical installation unit
Unité d'installation électrique prémontée

(30) Priorität: 21.04.2006 DE 202006006469 U; 20.10.2005 DE 202005016443 U
(43) Veröffentlichungstag der Anmeldung: 25.04.2007
(73) Patentinhaber: Weidmüller Interface GmbH & Co. KG, 32758 Detmold (DE)
(72) Erfinder: Jaschke, Bernhard, 32791, Lage (DE); Hanning, Walter, 32758, Detmold (DE); Fricke, Herbert, 32760, Detmold (DE); Püschner, Klaus, 32756, Detmold (DE); Richts, Jörg, 33189, Schlangen (DE)
(74) Vertreter: Specht, Peter

(56) Entgegenhaltungen:
- EP-A- 1 422 799
- EP-A1- 1 146 619
- EP-A2- 0 466 043

## Beschreibung

Die Erfindung betrifft eine vormontierte elektrische Installationseinheit nach dem Oberbegriff des Anspruchs 1. Das Dokument EP 1 422 799 offenbart eine Einheit gemäss dem Oberbegriff des Anspruchs 1.

Insbesondere im Bereich der Hausinstallationstechnik ist es bekannt, zur Vermeidung von Montageaufwand vor Ort beim Kunden und zur Minimierung möglicher Installationsfehler das Innere des Schaltschrankes nach Art einer oder mehrerer Installationseinheit(en) vorzumontieren und dann die vormontierten Einheiten jeweils als ganzes im Schaltschrank zu befestigen. Eine derartige Installationseinheit weist mehrere in der Regel eines Basis und mehrere darauf parallel zueinander geordnete Tragschienen oder Trägerleisten auf, auf welche wiederum elektrische Module wie Sicherungen oder dgl. reihenklemmenartig aufgrastet sind.

Dabei wird üblicherweise eines der Module jeder Stromschiene mittels Drähten mit Spannung versorgt. Innerhalb der Module jeder Stromscheine kann die Potentialverteilung mittels Querverbindem oder dgl. erfolgen.

An dieser Art der Montage ist insbesondere der Zeitaufwand nachteilig, welcher zum Aufbau der Verdrahtung zum Anschluss der Einspeisemodule jeder Tragschiene erforderlich ist.

Die Erfindung zielt darauf ab, dieses Problem auf einfache Weise zu beheben.

Die Erfindung löst diese Aufgabe durch den Gegenstand des Anspruchs 1.

Sie schafft eine Installationseinheit für eine Montage als vorzugsweise vormontierte Einheit, insbesondere in einem Schaltschrank, mit einer Basis, die vorzugsweise aus zueinander parallel ausgerichteten Grundleisten besteht, auf der mehrere parallel zueinander und senkrecht zu den Grundleisten ausgerichtete Tragschienen oder Trägerleisten angebracht sind, die zum Aufrasten von reihenklemmenartigen elektrischen Modulen - insbesondere Modulargeräte wie FI-Schalter, Leistungsschutzschalter usw. - dienen, wobei je Tragschiene jeweils wenigstens eines der Module, insbesondere das erste der Module, als Einspeisemodul zum Anschluss einer oder mehrerer Versorgungsspannungen ausgelegt ist, gekennzeichnet durch wenigstens eine auf die Basis aufsetzbare oder an diese angeformte Versorgungsleiste, vorzugsweise mit einem Isolierstoffgehäuse und einer im Isolierstoffgehäuse aufgenommenen Stromschienenanordnung mit Stromschienen und mit weiteren Stromschienenstücken zur Verbindung der Stromschienen mit den Anschlüssen der Einspeisemodule.

Unter "angeformt" ist eine einstückige Ausgestaltung mit der Basis zu verstehen. Angeformt wird in diesem Fall das Isolierstoffgehäuse der Versorgungsleiste.

Vorzugsweise sind die Stromschienenstücke als leicht handhabbare und montierbare Winkelstücke auszulegen.

Die Begriffe der Stromschiene und des Stromschienestückes (wenigstens eins ist vorzusehen) ist nicht zu eng zu interpretieren. Als Stromschienestück kann ein Flachmaterial oder auch beispielsweise ein stiftartiges Stück, beispielsweise mit quadratischem oder auch rundem Querschnitt verwendet werden.

Alternativ kann eine Rastverbindung oder eine sonstige Verbindung zwischen Basis und Versorgungsleiste ausgebildet sein.

Dabei kann die Versorgungsleiste als ganzes beweglich, insbesondere verschieblich an der Basis angeordnet sein, wobei sie Stromschienenstücke aufweise, die beim Verschieben in die Anschlüsse der Module eingreifen, so dass die Module gemeinsam mit nur einer Bewegung kontaktiert werden.

Alternativ sind die Winkelstücke beweglich an den Stromschienen der Versorgungsleiste angeordnet.

Es ist auch denkbar, die Winkelstücke an den Einspeisemodulen vorzumontieren und die vormontierten Module auf die Tragschiene aufzurasten.

Jeder dieser Möglichkeiten bringt den Vorteil mit sich, dass auf eine aufwendige Verdrahtung verzichtet werden kann. Die Montage wird vereinfacht und die Sicherheit erhöht. Dabei beleibt eine weitgehenden Kompatibilität zu bisherigen Lösungen bestehen.

Die Erfindung schafft auch eine Installationseinheit der gattungsgemäßen Art, ergänzend ausgestattet mit an den an den Modulen vormontierten oder vormontierbaren Stromschienenstücken, die insbesondere als Winkelstücke oder gerade Stromschienenstücke ausgebildet sind. Derartige Module zeichnen sich durch eine besonders einfache Montierbarkeit aus.

Weitere vorteilhafte Ausgestaltungen sind den Unteransprüchen zu entnehmen.

Nachfolgend wird die Erfindung anhand von Ausführungsbeispielen unter Bezug auf die Zeichnung näher beschrieben. Es zeigt:
- Fig. 1: eine schematische Ansicht einer Installationseinheit während der Montage;
- Fig. 2: eine Versorgungsleiste der Installationseinheit aus Fig. 1;
- Fig. 3: einzelne Bauelemente der Versorgungsleiste aus Fig. 2;
- Fig. 4: eine schematische Ansicht einer zweiten Installationseinheit während der Montage;
- Fig. 5: eine Ausschnittsvergrößerung aus Fig. 4;
- Fig. 6: eine Sprengansicht von Elementen aus Fig. 4 und 5; und
- Fig. 7a,b: die Montage eines Einspeisemoduls an der Tragschiene bei gleichzeitiger Kontaktierung der Versorgungsleiste.

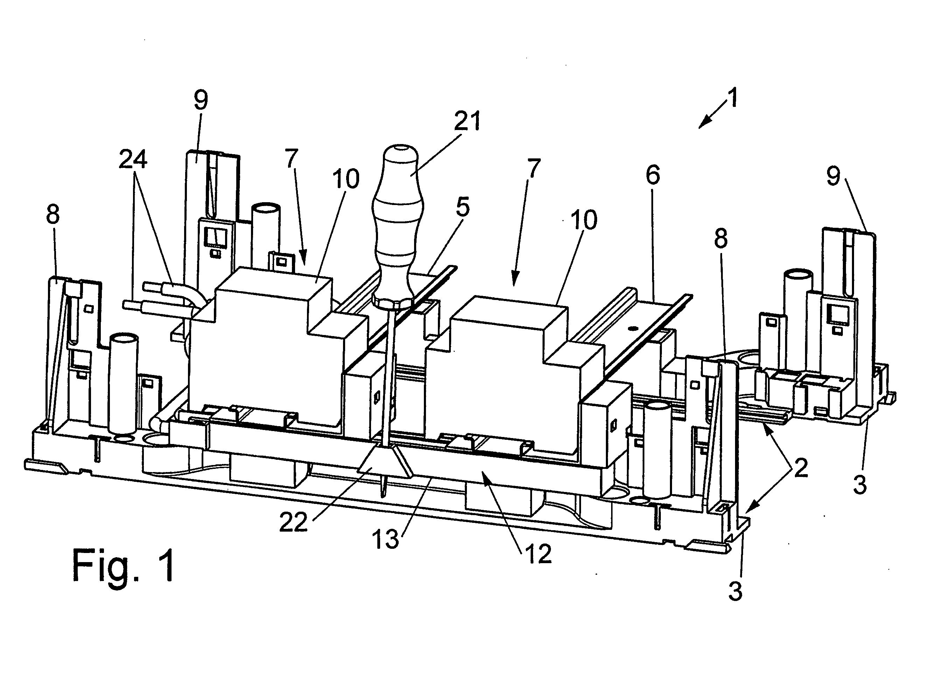

Fig. 1 zeigt eine Installationseinheit 1, wie sie zur Realisierung einer Hausinstallation eingesetzt wird, während ihrer Vormontage.

Die Installationseinheit 1 weist eine Basis 2 auf, die hier aus zwei zueinander parallel ausgerichteten seitlichen Grundleisten 3, 4 besteht. Auf der Basis 2 sind mehrere wiederum parallel zueinander und senkrecht zu den Grundleisten 3, 4 ausgerichtete Tragschienen oder Trägerleisten 5, 6 angebracht, die zum Aufrasten von reihenklemmenartigen elektrischen Modulen - insbesondere Sicherungen 7 - dienen. Dargestellt ist je Tragschiene nur eines der Module, und zwar das jeweilige Einspeisemodul 10. Rein beispielhaft ist die Anordnung mit zwei Tragschienen oder Trägerleisten zu verstehen, da die Zahl der Tragschienen oder Trägerleisten variierbar ist.

Jede Installationseinheit 1 wird kundenspezifisch vormontiert und dann im Schaltschrank als ganzes montiert, wobei lediglich noch die Versorgungspotentiale anzuschließen sind.

An den Enden der Grundleisten 3, 4 sind senkrecht zu diesen ausgerichtete Haltestege 8, 9 angeordnet, an welchen Anschlussleisten oder dgl. zum Anschluss externer Leiter angebracht werden können. Diese externen Leiter dienen zum Beispiel der Spannungsversorgung der gesamten Installationseinheit z.B. mit Drehstrom.

Die Spannungsversorgung innerhalb der Module auf jeder Tragschiene erfolgt vorzugsweise mittels Querverbindern, die zum Beispiel kammartig aufgebaut sind (hier nicht dargestellt).

Die Spannungsverordnung jeder einzelnen Tragschiene erfolgt dagegen an den Einspeisemodulen 10, wobei auf jeder Tragschiene vorzugsweise das jeweils erste Modul als Einspeisemodul 10 dient bzw. ausgelegt ist.

Dazu sind die Einspeisemodule 10 mit hier seitlich ausgerichteten Anschlüssen 11 versehen, die z.B. als Schraubanschlüsse ausgebildet sein können. Sämtliche Anschlüsse 11 sind zu einer Seite gerichtet. Denkbar ist es auch, sämtliche Anschlüsse zu beiden Seiten hin vorzusehen. Bei dem zweiten Ausführungsbeispiel können die Anschlüsse auch gemischt angeordnet sein.

Nach dem Stand der Technik wurden die Einspeisemodule 10 mittels Drähten relativ umständlich mit zugehörigen Einspeisepunkten der Einheit verbunden.

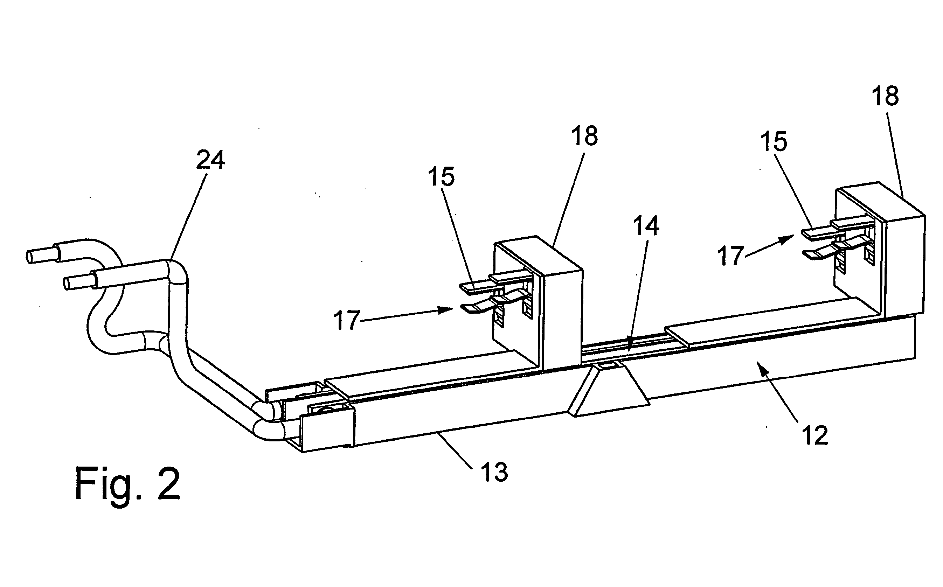

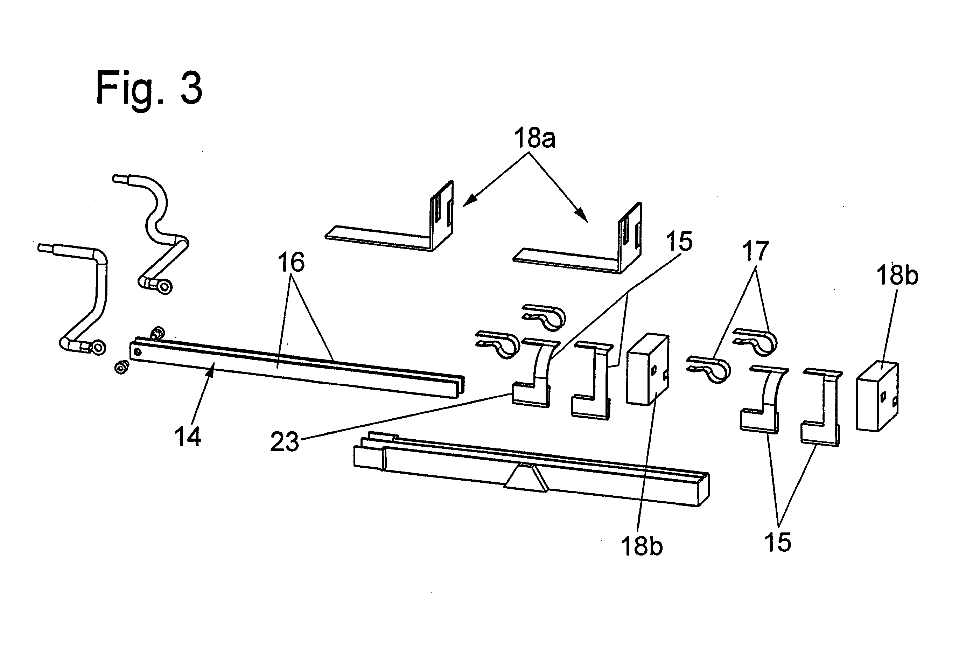

Erfindungsgemäß erfolgt die Spannungsversorgung der Einspeisemodule dagegen mittels einer tragschienenübergreifenden Versorgungsleiste 12, welche sich über zwei oder - je nach Anwendung - mehr der Tragschienen oder Trägerleisten erstreckt, wobei die Versorgungsleiste 12 ein Isolierstoffgehäuse 13 aufweist, das eine Stromschienenanordnung 14 oder u.U. auch eine interne vormontierte Verdrahtung einfasst. Zur Verbindung der Stromschienen der Stromschienenanordnung 14 (Fig. 2 und 3) mit den Anschlüssen 11 dienen Abzweigungs-Stromschienenstücke, die vorzugsweise als Winkelstücke 15 ausgebildet sind, die mit einem ihrer Enden mit jeweils einer der Stromschienen 16 der Stromschienenanordnung verbunden sind und mit ihrem anderen Ende in die Anschlüsse 11 eingreifen, wobei über die Ende ggf. auch Federn 17 oder dgl. zur Verbesserung des Kontaktes gesetzt sein können.

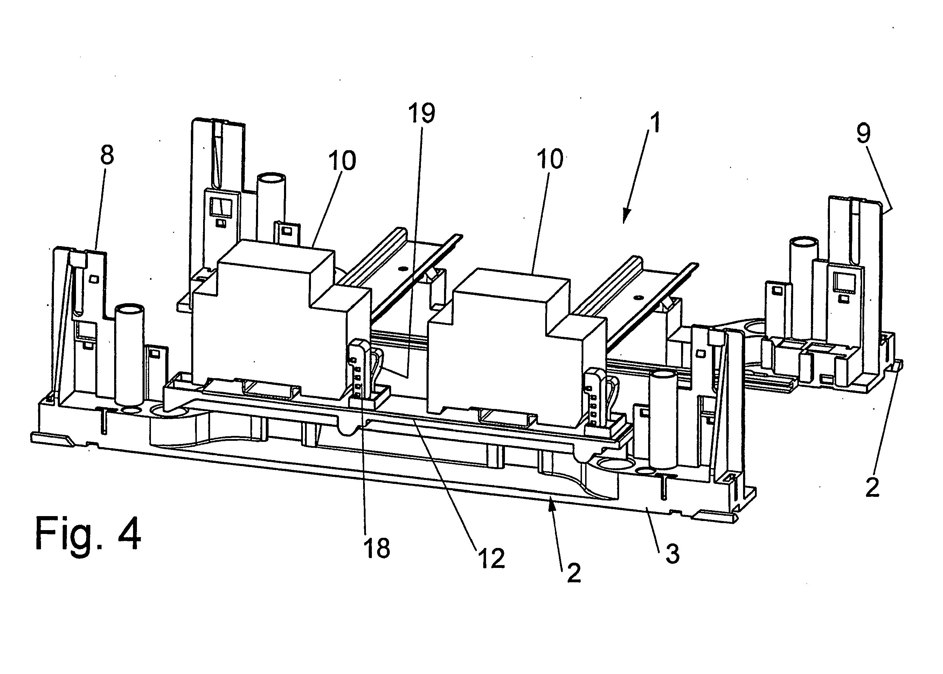

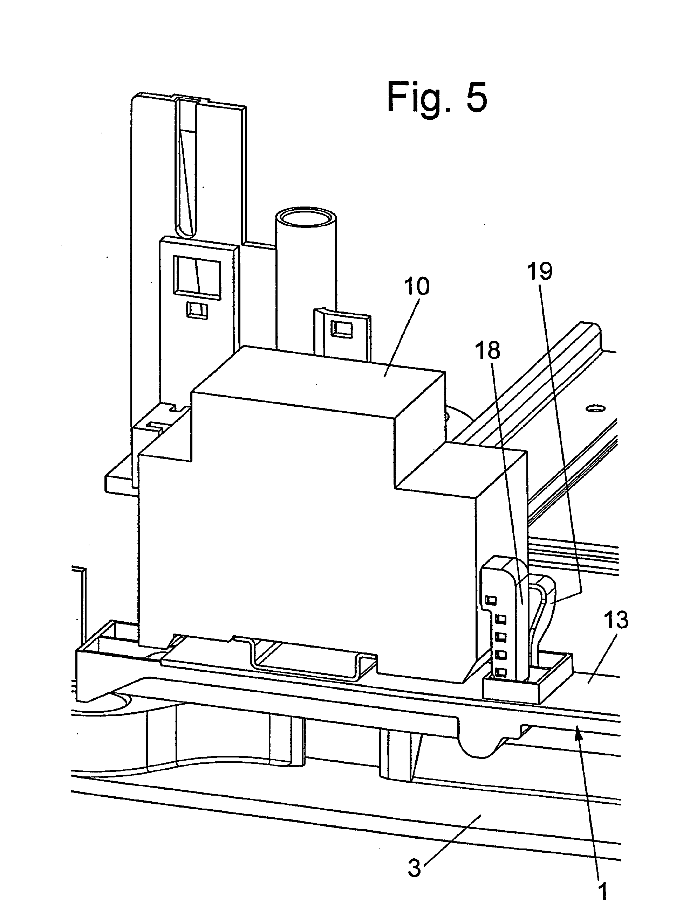

Zur Erhöhung der Sicherheit bietet es sich an, die Winkelstücke 15 mit kleinen entsprechenden, ggf. mehrteiligen Isolierstoffgehäusen 18a, b zu umgeben (Fig. 1-3 und 4 - 6), die auch in sich winklig ausgebildet sein können (Fig. 4 - 6) und einteilig oder mehrteilig ausgebildet sein können (siehe zum Beispiel Fig. 3 zur mehrteiligen Variante mit Grundgehäuse und Deckel).

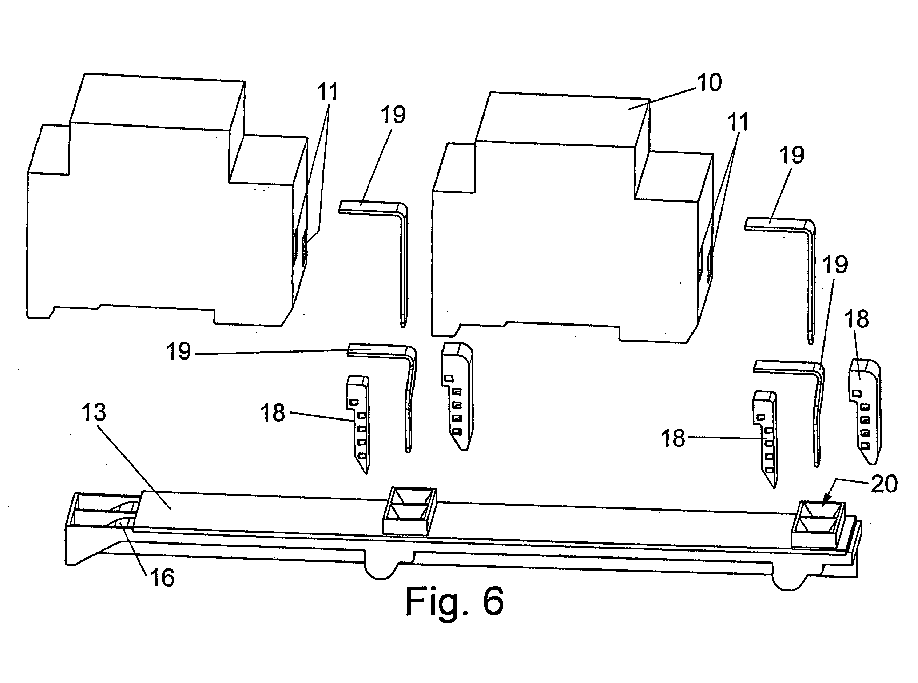

Diese Winkelstücke 15 werden entweder an der Stromschienenanordnung 14 starr montiert (Fig. 1-3; z.B. mit Klemmbereichen 23), so dass zur Kontaktierung der Anschlüsse 11 (Fig. 6)die Versorgungsleiste an sich beweglich, insbesondere verschieblich an der Basis anzuordnen ist. Sie kann beispielsweise schienenartig mit Stegen an korrespondierenden Stegen der Basis geführt sein (nicht dargestellt).

Wird an der vormontierten Einheit die Versorgungsleiste 12 verschoben (durch Schwenken des Schraubendrehers 21), greifen die Enden der ein- oder mehrteiligen Winkelstücke 15 in die Anschlüsse. Die Federn 17 können dabei auf einfache Weise einen federnden Sitz in den Schraubanschlüssen 11 der Einspeisemodule 10 gewährleisten, die allerdings zur Montage geöffnet sein müssen. Diese Auslegung hat den Vorteil, dass quasi keines der bekannten Bauelemente der Installationseinheiten einer besonderen Anpassung bedarf. Es wird vielmehr lediglich die Verdrahtung durch die Versorgungsschiene 12 ersetzt, was die Wahrscheinlichkeit von Fehlern verringert und die Vormontage deutlich vereinfacht. Dabei kann aber die Alternative der Verdrahtung theoretisch weiter genutzt werden, wenn der Einsatz der Versorgungsleiste nicht gewünscht ist.

Nach Fig. 1 wird die Versorgungsleiste 12 auf die Grundleiste 3 aufsetzt, woraufhin es lediglich noch notwendig ist, die Versorgungsleiste 12 seitlich zu verschieben, um die Winkelstücke in die gleichsinnig ausgerichteten Anschlüsse 11 einzuschieben.

Derart werden mit nur einer einzigen Schiebebewegung alle Versorgungsanschlüsse 11 der Einspeisemodule 10 der Tragschienen 6 gleichzeitig von der Versorgungsleiste 12 kontaktiert. Die Spannungsversorgung der Versorgungsleiste 12 an sich kann mit zwei Leitern 24 oder einer weiteren vormontierten Einspeiseleiste erfolgen (hier nicht dargestellt): Das Verschieben der Versorgungsleiste erfolgt wiederum bevorzugt mit Hilfe eines Werkzeuges (hier ein Schraubendreher 21, der in einen Ansatz 22 der Versorgungsleiste 12 eingesetzt und dann an der Basis 2 abgestützt wird (z.B. an einem hier nicht dargestellten Steg), so dass die Basis als Widerlager bzw. Schwenklage fungiert.

Alternativ können die Winkelstücke 15 an der Stromschienenanordnung z.B. verschwenkbar angeordnet sein (hier nicht dargestellt).

Es ist ferner denkbar, die Winkelstücke 19 an den Anschlüssen der Einspeisemodule vorzumontieren (dazu werden die Winkelstücke 19 in diese eingesteckt; Fig. 4, 5, 6 und 7) und dann gemeinsam mit den Einspeisemodulen 10 auf die Tragschienen oder Trägerleisten zu rasten, wobei die freien Ende der Winkelstücke 19 dann vorzugsweise kontaktierend auch in Ausnehmungen 20 der Isolierstoffgehäuse 13 und dann in Ausnehmungen der Stromschienenanordnung 14 der Versorgungsleiste 12 eingreifen und diese kontaktieren (hier nicht zu erkennen). Zur Realisierung einer genügenden Isolierung der Stromschienen 16 der Versorgungsleiste können diese in Nuten 20 des Isolierstoffgehäuses der Versorgungsschiene 12 angeordnet sein.

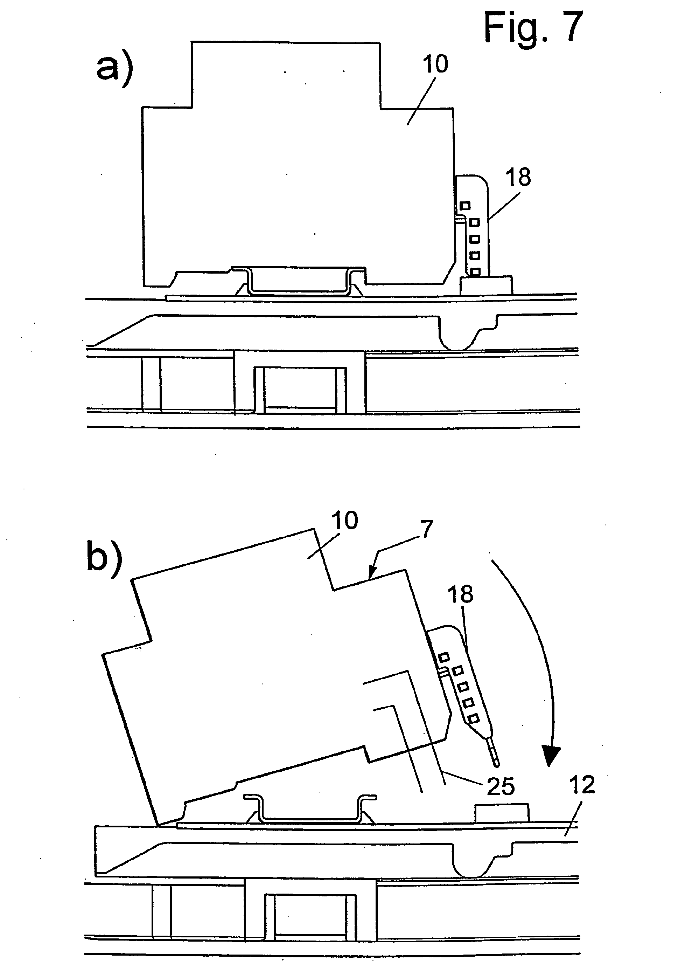

Es ist auch denkbar, Stromschienenstücke 25 (insbesondere wiederum Winkelstücke oder gerade Stromschienenstücke) direkt fix bei der Montage der Module in diese zu integrieren, was als Alternative in Fig. 7b dargestellt ist. Auch derart ist es möglich, nur mit einer einzigen Aufschwenkbewegung die Module auf der Tragschiene zu montieren und gleichzeitig die Versorgungsleiste zu kontaktieren.

Allen Varianten gemeinsam ist die einfache und schnelle sowie übersichtliche Möglichkeit zur Vormontage. Nicht dargestellt ist eine Variante mit einer Basis, an welche die Isolierstoffgehäuse der Versorgungsleisten direkt angeformt sind, die aber ebenfalls vorteilhaft als vormontierte Basis bereitgestellt werden kann.

Die Anschlüsse 11 können bevorzugt als Schraubanschlüsse, als Flachsteckanschlüsse, als IDC-Anschlüsse oder als Zugbügelanschlüsse ausgebildet sein. Andere Anschlusstechniken sind ebenfalls denkbar.

### Bezugszeichen

- Installationseinheit: 1
- Basis: 2
- Grundleisten: 3, 4
- Tragschienen: 5, 6
- Modul: 7
- Haltestege: 8, 9
- Einspeisemodule: 10
- Anschlüsse: 11
- Versorgungsleiste: 12
- Isolierstoffgehäuse: 13
- Stromschienenanordnung: 14
- Winkelstücke: 15
- Stromschienen: 16
- Federn: 17
- Isolierstoffgehäuse: 18
- Winkelstücke: 19
- Ausnehmungen: 20
- Schraubendreher: 21
- Ansatz: 22
- Klemmbereiche: 23
- Leiter: 24

## Patentansprüche

1. Elektrische Installationseinheit (1) für eine Montage als vormontierbare oder vormontierte Einheit, insbesondere in einem Schallschrank, mit einer Basis (2), auf der mehrere Tragschienen oder Trägerleisten (5, 6) angeordnet sind, die zum Aufrasten von reihenklemmenartigen elektrischen Modulen (7) dienen, wobei je Tragschiene jeweils wenigstens eines der Module, insbesondere das erste der Module, als Einspeisemodul (10) zum Anschluss einer oder mehrerer Versorgungsspannungen ausgelegt ist, und mit einer auf die Basis (2) aufsetzbaren oder an diese angeformten Versorgungsleiste (12) mit cinem Isolierstefffichäuse (13) und einer im Isolierstoffgehäuse (13) aufgenommenen Stromschienenanordnung mit Stromschienen (16), und mit Stromschienenstücken zur Verbindung der Stromschienen (16) mit den Anschlüssen (11) der Einspeisemodule (10) wobei die Stromschienenstücke als Winkelstücke (15, 19) ausgebildet sind, welche von Isolierstoffgehäusen (18) umgeben sind, wobei die Winkelstücke (15, 19) an der Stromschienenanordnung starr montiert sind, **dadurch gekennzeichnet, dass** zur Kontaktierung der Anschlüsse (11) die Versorgungsleiste (12) an sich beweglich an der Basis (2) angeordnet ist.

2. Installationseinheit nach Anspruch 1, **dadurch gekennzeichnet, dass** die Basis aus zueinander parallel ausgerichteten Grundleisten (3, 4) besteht.

3. Installationseinheit nach Anspruch 1 oder 2, **dadurch gekennzeichnet, dass** die Einspeisemodule (10) mit Anschlüssen (11) versehen sind, die vorzugsweise als Schraubanschlüsse ausgebildet sind, wobei sämtliche der Anschlüsse (11) der Einspeisemodule in montierter Stellung zu einer Seite ausgerichtet sind.

4. Installationseinheit nach Anspruch 1 oder 2, **dadurch gekennzeichnet, dass** die Einspeisemodule (10) mit Anschlüssen (11) versehen sind, die vorzugsweise als Schraubansehlüsse ausgebildet sind, wobei sämtliche der Anschlüsse (11) der Einspeisemodule in montierter Stellung zu beiden Seiten der Geräte hin ausgerichtet sind.

5. Installationseinheit nach einem der vorstehenden Ansprüche, **dadurch gekennzeichnet, dass** sich die Versorgungsleiste (12) über zwei oder- je nach Anwendung - mehr der Tragschienen oder Trägerleisten (5, 6) erstreckt.

6. Installationseinheit nach einem der vorstehenden Ansprüche, **dadurch gekennzeichnet, dass** die Versorgungsleiste (12) senkrecht zu den Tragschienen oder Trägerleisten (5, 6) ausgerichtet ist.

7. Installationseinheit nach einem der vorstehenden Ansprüche, **dadurch gekennzeichnet, dass** die Winkelstücke (15) in montierter Stellung mit einem ihrer Enden mit jeweils einer der Stromschienen (16) der Stromschienenanordnung verbunden sind und mit ihrem anderen Ende in die Anschlüsse (11) der Einspeisemodule (10) eingreifen.

8. Installationseinheit nach einem der vorstehenden Ansprüche, **dadurch gekennzeichnet, dass** die Versorgungsleiste (12) an der Basis (2) verschieblich geführt ist.

9. Installationseinheit nach einem der vorstehenden Ansprüche, **dadurch gekennzeichnet, dass** die Versorgungsleiste (12) an einer der Grundschienen (3, 4) der Basis verschieblich geführt ist.

10. Installationseinheit nach einem der vorstehenden Ansprüche, **dadurch gekennzeichnet, dass** die Winkelstücke (15, 19) an der Stromschienenanordnung beweglich, insbesondere verschwenkbar angeordnet sind.

11. Installationseinheit nach einem der vorstehenden Ansprüche, **dadurch gekennzeichnet, dass** die Winkelstücke (19) an den Anschlüssen der Einspeisemodule vormontierbar sind und dann gemeinsam mit den Einspeisemodulen (10) auf die Tragschienen oder Tragerleisten aufrastbar sind, wobei die freien Ende der Winkelstücke (10) kontaktierend in Ausnehmungen (20) der Stromschienen der Versorgungsleiste eingreifen und diese kontaktieren.

12. Installationiseinheit nach einem der vorstehenden Ansprüche, **dadurch gekennzeichnet, dass** die Stromschienen (16) der Versorgungsleiste in Nuten (20) des Isolierstoffgehäuses der Versorgungsschiene (12) angeordnet sind.

13. Installationseinheit nach einem der vorstehenden Ansprüche, **dadurch gekennzeichnet, dass** den Enden der Winkelstücke (15, 19) Kontaktfedern (17) zugeordnet sind.

14. Installationseinheit nach einem der vorstehenden Ansprüche, **dadurch gekennzeichnet, dass** die Anschlüsse (11) als Schraubanschlüsse, als Flachsteckanschlüsse, als IDC-Anschlüsse oder als Zugbügelanschlüsse ausgebildet sind.

15. Installationseinheit nach einem der vorstehenden Ansprüche , **gekennzeichnet durch** an wenigstens einem der Module vormontierte oder vormontierbare Stromschienenstücke (25), die derart als Winkelstücke oder gerade Stromschienenstücke ausbebildet sind, dass die Module mit nur einer Aufschwenkbewegung auf die Tragschiene montierbar sind, wobei sie gleichzeitig wenigstens eine der Versorgungsleisten kontaktieren.

## Claims

1. An electrical installation unit (1) for mounting as a unit which can be or is pre-assembled, in particular in a switchgear cabinet, with a base (2) on which a plurality of mounting rails or support bars (5, 6) are arranged which serve for snapping-on modular-terminal-like electrical modules (7), with, per mounting rail, in each case at least one of the modules, in particular the first of the modules, being designed as an infeed module (10) for connecting one or more supply voltages, and with a supply bar (12) which can be placed on or is formed onto the base (2) with a moulded-plastic housing (13) and a conductor-bar arrangement with conductor bars (16) which is accommodated in the moulded-plastic housing (13), and with conductor-bar pieces for connecting the conductor bars (16) to the connections (11) of the infeed modules (10), the conductor-bar pieces being formed as angled pieces (15, 19) which are surrounded by moulded-plastic housings (18), the angled pieces (15, 19) being rigidly mounted on the conductor-bar arrangement, **characterised in that** for contacting the connections (11) the supply bar (12) in itself is arranged movably on the base (2).

2. An installation unit according to Claim 1, **characterised in that** the base consists of base bars (3, 4) oriented parallel to one another.

3. An installation unit according to Claim 1 or 2, **characterised in that** the infeed modules (10) are provided with connections (11) which are preferably formed as screw connections, all the connections (11) of the infeed modules in the mounted position being oriented to one side.

4. An installation unit according to Claim 1 or 2, **characterised in that** the infeed modules (10) are provided with connections (11) which are preferably formed as screw connections, all the connections (11) of the infeed modules in the mounted position being oriented on both sides of the apparatus.

5. An installation unit according to one of the preceding claims, **characterised in that** the supply bar (12) extends over two or - depending on application - more of the mounting rails or support bars (5, 6).

6. An installation unit according to one of the preceding claims, **characterised in that** the supply bar (12) is oriented perpendicular to the mounting rails or support bars (5, 6).

7. An installation unit according to one of the preceding claims, **characterised in that** the angled pieces (15) in the mounted position are connected by one of their ends to in each case one of the conductor bars (16) of the conductor-bar arrangement and engage with their other ends in the connections (11) of the infeed modules (10).

8. An installation unit according to one of the preceding claims, **characterised in that** the supply bar (12) is displaceably guided on the base (2).

9. An installation unit according to one of the preceding claims, **characterised in that** the supply bar (12) is displaceably guided on one of the base rails (3, 4) of the base.

10. An installation unit according to one of the preceding claims, **characterised in that** the angled pieces (15, 19) are arranged movably, in particular pivotably, on the conductor-bar arrangement.

11. An installation unit according to one of the preceding claims, **characterised in that** the angled pieces (19) can be pre-mounted on the connections of the infeed modules and then together with the infeed modules (10) can be latched onto the mounting rails or support bars, the free ends of the angled pieces (10) engaging in contacting manner in recesses (20) in the conductor bars of the supply bar and contacting it.

12. An installation unit according to one of the preceding claims, **characterised in that** the conductor bars (16) of the supply bar are arranged in grooves (20) of the moulded-plastic housing of the supply rail (12).

13. An installation unit according to one of the preceding claims, **characterised in that** contact springs (17) are associated with the ends of the angled pieces (15, 19).

14. An installation unit according to one of the preceding claims, **characterised in that** the connections (11) are formed as screw connections, as push-on connections, as IDC connections or as strain-relief clamp connections.

15. An installation unit according to one of the preceding claims, **characterised by** conductor-bar pieces (25) which are or can be pre-mounted on at least one of the modules, which pieces are formed as angled pieces or straight conductor-bar pieces such that the modules can be mounted on the mounting rail with only a pivoting-up movement, and simultaneously contacting at least one of the supply bars.

## Revendications

1. Unité d'installation électrique (1) pour un montage sous la forme d'une unité prémontable ou prémontée en particulier dans une armoire, comprenant une base (2) sur laquelle sont montés plusieurs profilés supports ou barres porteuses (5, 6) qui servent à l'encliquetage de modules électriques (7) de type barrettes à borne, chacun des profilés supports d'au moins l'un des modules, en particulier du premier module étant réalisé en tant que module d'alimentation (10) pour la jonction avec une ou plusieurs tensions d'alimentation, ainsi qu'une barre d'alimentation (12) pouvant être montée sur la base (2) ou formée sur celle-ci, un boîtier (13) en un matériau isolant, un dispositif à rails conducteurs avec des rails conducteurs (16) monté dans le boîtier isolant (13) et des éléments de rails conducteurs pour relier les rails conducteurs (16) avec les bornes (11) du module d'alimentation (10), les éléments de rails conducteurs étant réalisés sous la forme de pièces coudées (15, 19) entourées par des boîtiers (18) en matériau isolant, les pièces coudées (15, 19) étant montées rigidement sur le dispositif à rails conducteurs,
**caractérisée en ce que**
pour permettre la mise en contact des bornes (11), à barre d'alimentation (12) est montée mobile sur la base (2).

2. Unité d'installation conforme à la revendication 1,
**caractérisée en ce que**
la base est constituée par des barrettes de base (3, 4) dirigées parallèlement les unes aux autres.

3. Unité d'installation conforme à la revendication 1 ou 2,
**caractérisée en ce que**
les modules d'alimentation (10) sont équipés de bornes (11) qui sont de préférence réalisées sous la forme de raccords filetés, la totalité des bornes (11) des modules d'alimentation étant orientées vers un côté en position montée.

4. Unité d'installation conforme à la revendication 1 ou 2,
**caractérisée en ce que**
les modules d'alimentation (10) sont équipés de bornes (11) qui sont, de préférence, réalisées sous la forme de raccords filetés, la totalité des bornes (11) des modules d'alimentation étant orientées vers les deux côtés de l'appareil en position montée.

5. Unité d'installation conforme à l'une des revendications précédentes,
**caractérisée en ce que**
la barre d'alimentation (12) s'étend sur deux ou un plus grand nombre de profilés supports ou des barres porteuses (5, 6) en fonction de l'utilisation.

6. Unité d'installation conforme à l'une des revendications précédentes,
**caractérisée en ce que**
la barre d'alimentation (12) est orientée perpendiculairement aux profilés supports ou aux barres porteuses (5, 6).

7. Unité d'installation conforme à l'une des revendications précédentes,
**caractérisée en ce qu'**
à l'état monté, les pièces coudées (15) sont reliées par l'une de leurs extrémités avec l'un respectif des rails conducteurs (16) dispositifs à rails conducteurs et viennent en prise par leur autre extrémité dans les bornes (11) des modules d'alimentation (10).

8. Unité d'installation conforme à l'une des revendications précédentes,
**caractérisée en ce que**
la barre d'alimentation (12) est montée coulissante sur la base (2).

9. Unité d'installation conforme à l'une des revendications précédentes,
**caractérisée en ce que**
la barre d'alimentation (12) est guidée mobile en coulissement sur l'un des profilés de base (3, 4) de la base.

10. Unité d'installation conforme à l'une des revendications précédentes,
**caractérisée en ce que**
les pièces coudées (15, 19) sont montées mobiles en particulier coulissantes sur le dispositif à rails conducteurs.

11. Unité d'installation conforme à l'une des revendications précédentes,
**caractérisée en ce que**
les pièces coudées (19) peuvent être prémontées sur les bornes des modules d'alimentation et peuvent ensuite être encliquetées en commun avec les modules d'alimentation (10) sur les profilés supports ou les barres porteuses, les extrémités libres des pièces coudées (10) venant en prise en assurant le contact dans des évidements (20) des rails conducteurs des barrettes conductrices et venant en contact avec ces rails.

12. Unité d'installation conforme à l'une des revendications précédentes,
**caractérisée en ce que**
les rails conducteurs (16) de la barre d'alimentation sont montés dans des rainures (20) du boîtier en matériau isolant du rail d'alimentation (12).

13. Unité d'installation conforme à l'une des revendications précédentes,
**caractérisée en ce que**
des ressorts de contact (17) sont associés aux extrémités des pièces coudées (15, 19).

14. Unité d'installation conforme à l'une des revendications précédentes,
**caractérisée en ce que**
les bornes (11) sont réalisées sous la forme de bornes filetées de bornes d'enfichage plates, de bornes IDC ou de bornes à étriers de traction.

15. Unité d'installation conforme à l'une des revendications précédentes,
**caractérisée par**
des pièces de rails conducteurs (25) prémontées ou pouvant être prémontées sur au moins l'un des modules qui sont réalisées sous la forme de pièces coudées ou de pièces de rails conducteurs, linéaires de sorte que les modules puissent être montés avec un seul mouvement de pivotement sur les profilés supports, pour qu'ils viennent simultanément en contact avec au moins l'une des barres d'alimentation.
